# EUROPÄISCHE PATENTSCHRIFT

(11) **EP 1 498 636 B1**
(45) Veröffentlichungstag und Bekanntmachung des Hinweises auf die Patenterteilung: **22.11.2006**
(21) Anmeldenummer: 04011642.8
(22) Anmeldetag: 17.05.2004
(51) Int. Cl.: F16F 9/58, B60G 17/005, B60G 15/06

(54) **Vorrichtung zum Blockieren einer Radaufhängung**
Device for blocking a suspension
Dispositif de bloquage d'une suspension

(30) Priorität: 18.07.2003 DE 10334034
(43) Veröffentlichungstag der Anmeldung: 19.01.2005
(73) Patentinhaber: Dr.Ing. h.c.F. Porsche Aktiengesellschaft, 70435 Stuttgart (DE)
(72) Erfinder: Schulz, Achim, 75223 Niefern-Oeschelbronn (DE); Poetsch, Günter, 74372 Sersheim (DE); Tardy-Tuch, Georg von, 71272 Malsheim (DE)

(56) Entgegenhaltungen:
- EP-A- 0 967 143
- US-B1- 6 186 488

## Beschreibung

Die Erfindung bezieht sich auf eine Vorrichtung zum Blockieren einer Radaufhängung insbesondere eines Kraftfahrzeuges nach dem Oberbegriff des Anspruchs 1.

Aus der DE 28 22 105 A1 ist eine Beeinflussung des Federweges einer Schraubenfeder eines Federbeines für ein Kraftfahrzeug über Distanzstücke bekannt. Diese sind an einer Platte über Schrauben gehalten und werden jeweils zwischen Federwindungen geklemmt.

Die DE 197 51 215 C1 zeigt eine Vorrichtung zum Blockieren einer Feder in einem Federbein, bei ein Distanzelement zum Transport eines Fahrzeugs vorgesehen ist. Das Distanzelement besteht aus mindestens einem in die Feder einklipsbaren Segment aus einem hartelastischen Kunststoff, das sich mit seinem unteren freien Ende an einem Federteller des Federbeines abstützt. Das Einclipsen des Distanzelementes in die Windungen der Feder erfolgt in der Weise, dass eine am Distanzelement vorgesehene obere Aufnahme als Einfädel-Aufnahme dient und das Distanzelement um diese Lagerung auf den Federteller des Federbeines verschwenkt wird.

Die Aufgabe der Erfindung besteht darin, eine Vorrichtung zu schaffen, mit der Federweg einer Radaufhängung eines Kraftfahrzeuges zum Transport in einfacher Weise verminderbar ist.

Diese Aufgabe wird erfindungsgemäß durch die Merkmale des Anspruchs 1 gelöst. Weitere vorteilhafte Merkmale beinhalten die Unteransprüche.

Erfindungsgemäß wird vorgeschlagen, dass das Distanzelement aus einem Körper besteht, der auf der Kolbenstange eines Feder- oder Dämpferbeines abnehmbar zwischen einer Zusatzfeder und einem zweiten Endanschlag gehalten ist. Das Distanzelement kann auch aus mehreren Körpern zusammengesetzt sein, um beispielsweise verschiedene Längen zu realisieren. Ein solches Distanzelement ist gegenüber den bekannten Vorrichtungen preiswerter herzustellen. Ein besonderer Vorteil liegt darin, dass es nicht mehr an der Feder wirkt und damit vom Windungsabstand der Feder, der sich durch Toleranzen oder konstruktive Änderungen verändern kann, unabhängig ist.

Das Distanzelement weist neben der zentralen Aufnahmeöffnung für die Kolbenstange eine schlitzförmige Einführöffnung auf, die sich von der zentralen Aufnahmeöffnung zur Außenfläche des Distanzelementes erstreckt und deren Breite geringfügig kleiner als der Durchmesser der Kolbenstange gewählt ist. Das vorzugsweise einteilig ausgeführte Distanzelement kann durch die Einführöffnung auf die Kolbenstange aufgeschoben werden verrastet dort, wenn die Kolbenstange in der Aufnahmeöffnung zu liegen kommt. Alternativ ist es möglich, das Distanzelement aus zwei zueinander klappbar und verriegelbar gehaltenen Segmenten auszuführen, so dass das Distanzelement im geöffneten Zustand der Segmente auf die Kolbenstange aufgebracht und dann verschlossen werden kann. Die Einführöffnung ist hier nicht erforderlich. Selbstverständlich ist es möglich, das Distanzelement durch andere, an sich bekannte Mittel auf der Kolbenstange aufschiebbar und abnehmbar zu halten.

In vorteilhafter Weise können ferner ein oder zwei Anschrägungen endseits am Distanzelement vorgesehen sein. Diese Anschrägungen sind im Bereich der Einführöffnung oder gegenüberliegend der Einführöffnung vorzusehen und erleichtern das Aufschieben des Distanzelementes auf die Kolbenstange. Um die hierbei notwendigen Kräfte zu vermindern, kann durch die Schrägen das Distanzelement zwischen der Zusatzfeder und einem zweiten Endanschlag verkantet und somit schräg angesetzt werden.

Das Distanzelement besteht vorzugsweise aus einem hartelastischen Kunststoff. Derartige Materialien sind korrosionsbeständig, haltbar und erlauben es darüber hinaus durch ihre elastische Eigenschaft, zum Aufclipsen des Distanzelementes eine Vorspannkraft zu erzeugen. Da die Dimensionierung des Distanzelementes vor allem im Hinblick auf die in Längsrichtung abzustützenden Kräfte vorgenommen wird, kann es von Vorteil sein, wenn gegenüber der Einführöffnung eine Querschnittsverminderung, beispielsweise in Form eines Schlitzes, vorgesehen ist, um die zum Aufspreizen des Distanzelementes während des Aufschiebens auf die Kolbenstange notwendigen Kräfte auf ein verträgliches Maß zu reduzieren.

Andere Materialien können je nach Anwendungsfall ebenfalls zum Einsatz kommen. So kann das Distanzelement beispielsweise auch aus Papier, hartgepresstem Papier oder einem anderen verrottbaren oder recyclierbaren Werkstoff bestehen, wenn ein Rückführung des Distanzelementes nach dem Transport des Fahrzeuges nicht sinnvoll ist. Wenn ein solches nicht elastisches Material verwendet ist müssen entsprechende Maßnahmen zum Halten des Distanzelementes ergriffen werden. Beispielsweise kann bei einem aus zwei zueinander klappbar und verriegelbar gehaltenen Segmenten bestehenden Distanzelement die Verriegelung der Segmente in einfacher Weise durch ein Klebeband erreicht werden.

Die Länge des Distanzelementes ist vorzugsweise so gewählt, dass bei vollständig ausgezogenem Dämpfer die äußere Länge des Distanzelementes der freiliegenden Länge der Kolbenstange zwischen Zusatzfeder und zweitem Endanschlag entspricht. Sind mehrere Distanzelemente in verschiedenen Längen, beispielsweise für Vorder- und Hinterachse, vorgesehen, so können die Distanzelemente zur besseren Unterscheidung farblich gekennzeichnet sein.

Solche Distanzelemente werden beispielsweise bei Neufahrzeugen eingesetzt, um beim Transport Schäden an der Bodengruppe, z. B. bei Be- und Entladefahrten und insbesondere beim Befahren von Verladerampen, zu vermeiden. Sie können nur an der Vorderachse oder an beiden Achsen eingesetzt sein. Auf diese Weise kann ein Fahrzeug in eine angehobene Position gebracht und dort gehalten werden. Zum Ausbau der Distanzelemente wird das Fahrzeug anhoben, bis die Räder frei sind. Die Räder müssen nicht demontiert werden. Das Distanzelement wird über die schlitzförmige Einführöffnung von der Kolbenstange wegdrückt. Bei einem Federbein ist das Distanzelement dann noch aus der Feder auszufädeln.

Mit der vorliegenden Erfindung ist der besondere Vorteil verbunden, dass durch das Distanzelement die Zusatzfeder beim Blockieren der Radaufhängung beteiligt ist. Auf einem Dämpfer vorgesehene Zusatzfedern sind regelmäßig als Anschlag für den Fall der maximalen Verkürzung des Dämpferelementes, wie sie beim vollständigen Einfedern einer Radaufhängung auftritt, ausgelegt. Zusatzfeder und Endanschlag sind daher bereits auslegungsgemäß in der Lage, große Kräfte aufzunehmen. Sie sind daher zum Blockieren der Radaufhängung besonders geeignet, da in diesem Fall durch die starke Verminderung oder gar Verhinderung eines Einfederns rasch große Kräfte auftreten.

Ein Ausführungsbeispiel der Erfindung ist in den Zeichnungen dargestellt und wird im folgenden näher beschrieben. Es zeigen
- Fig. 1: ein montiertes Distanzelement auf einem Federbein,
- Fig. 2: eine Schrägansicht auf ein erfindungsgemäßes Distanzelement,
- Fig. 3: eine Seitenansicht des Distanzelementes
- Fig. 4: eine Draufsicht auf das Distanzelement, und
- Fig. 5: eine alternative, klappbare Ausführung des Distanzelementes.

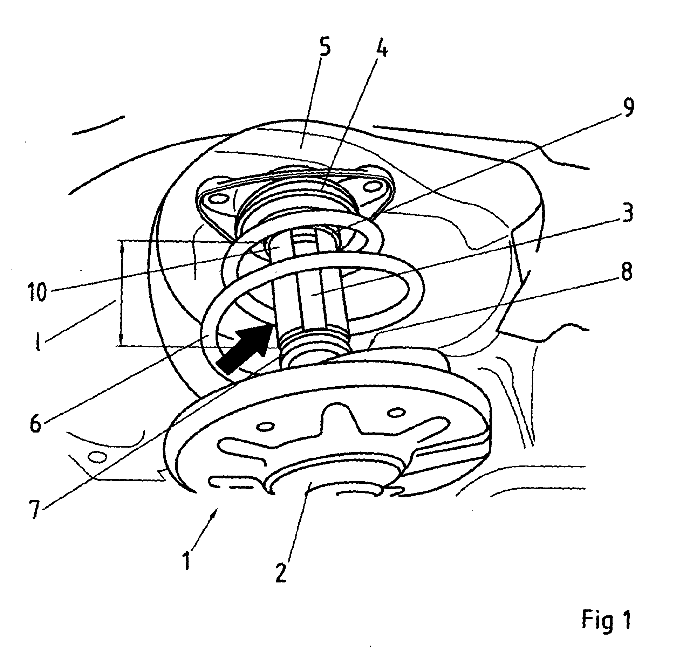

Fig. 1 zeigt ein Federbein 1, das Bestandteil einer nicht näher gezeigten Radaufhängung eines Kraftfahrzeuges ist. Das Federbein 1 besteht aus einem Dämpferzylinder 2 und einer Kolbenstange 3. Über ein elastische Stützlager 4 ist die Kolbenstange mit einer Karosserie 5 verbunden. Eine Tragfeder 6 des Federbeines 1 erstreckt sich um die Kolbenstange 3.

Auf der Kolbenstange 3 ist eine Zusatzfeder 7 angeordnet, die bei maximaler Verkürzung des Federbeines 1 zwischen zwei Endanschlägen wirksam wird, von denen der erste Endanschlag 8 durch die Oberseite des Dämpferzylinders und der zweite Endanschlag 9 durch die Unterseite des Stützlagers 4 gebildet ist. Die Zusatzfeder 7 ist im vorliegenden Fall als Schaumelement ausgeführt.

Für Transportzwecke kann ein Distanzelement 10, hier als geschlitzte Kunststoffhülse ausgeführt, an der Kolbenstange 3 eingeclipst werden. Das Distanzelement 10 füllt die freie Länge I zwischen dem freien Ende der Zusatzfeder 7 und dem zweiten Endanschlag 9 im wesentlichen vollständig aus und sorgt auf diese Weise dafür, dass die Zusatzfeder 7 bei jedem Einfedervorgang des Federbeines 1 wirksam wird. Die Einfederlänge des Federbeines 1 und damit die Einfedermöglichkeit der Radaufhängung sind somit auf den durch die Zusatzfeder 7 vorgegebenen freien Weg begrenzt.

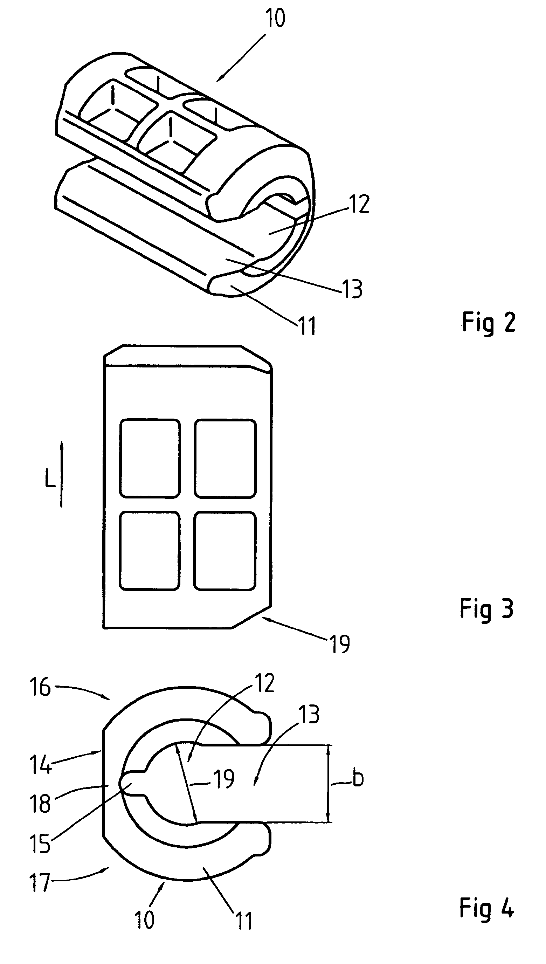

Wie aus der Ansicht nach Fig. 2 näher zu entnehmen, besteht das Distanzelement 10 aus einem Grundkörper 11, der eine zentrale und durchgehende Aufnahmeöffnung 12 für die Kolbenstange 3 aufweist. Die Aufnahmeöffnung 12 weist im wesentlichen denselben Durchmesser 19 wie die Kolbenstange 3 auf, damit das Distanzelement 10 dort leicht beweglich gehalten ist. Korrespondierend zur Aufnahmeöffnung 12 erstreckt sich eine schlitzförmige Einführöffnung 13 von der Aufnahmeöffnung 12 bis zur Außenseite des Distanzelementes 10, wobei die Breite b der Einführöffnung 13 geringfügig kleiner als der Durchmesser der Kolbenstange 3 ist. Im Ausführungsbeispiel beträgt der Durchmesser der Kolbenstange 21mm, der Durchmesser 19 21,5mm und die Breite b der Einführöffnung 13 20mm.

Das Distanzelement 10 ist aus glasfaserverstärktem Polyamid gefertigt, einem hartelastischen Kunststoff.

Bei der Dimensionierung des Distanzelementes 10 sind vor allem die in Längsrichtung L wirkenden Kräfte zwischen der Zusatzfeder 3 und dem Endanschlag 9 zu berücksichtigen. Gegenüberliegend der Einführöffnung 13 sind daher eine Abflachung 14 sowie eine Kerbe 15 angebracht, die insgesamt gegenüberliegend der Einführöffnung 13 eine deutlich Querschnittsverminderung des Deformationselementes 10 bewirken. Hierdurch wird das Deformationselement in zwei Schenkel 16, 17 aufgeteilt, die durch ein elastisches Scharnier 18 miteinander schwenkbar verbunden sind. Beim Aufschieben des Distanzelementes 10 auf die Kolbenstange 3 können somit die Schenkel 16, 17 auseinander schwenken und ermöglichen auf diese Weise den Durchtritt der Kolbenstange 3 durch die Einführöffnung 13. Sobald die Kolbenstange 3 die Aufnahmeöffnung 12 erreicht hat, schwenken die Schenkel 16, 17 durch das elastische Scharnier 18 in ihre Ausgangsposition zurück, so dass insgesamt das Distanzelement 10 auf die Kolbenstange 3 aufgeclipst ist.

Die in Fig. 3 gezeigte Anschrägung 19 erlaubt ein Verkanten des Distanzelementes 10 beim Aufschieben auf die Kolbenstange 3. Wie in Fig. 1 dargestellt, können auch zwei Anschrägungen 19, die gegenüberliegend angebracht sind, vorgesehen sein.

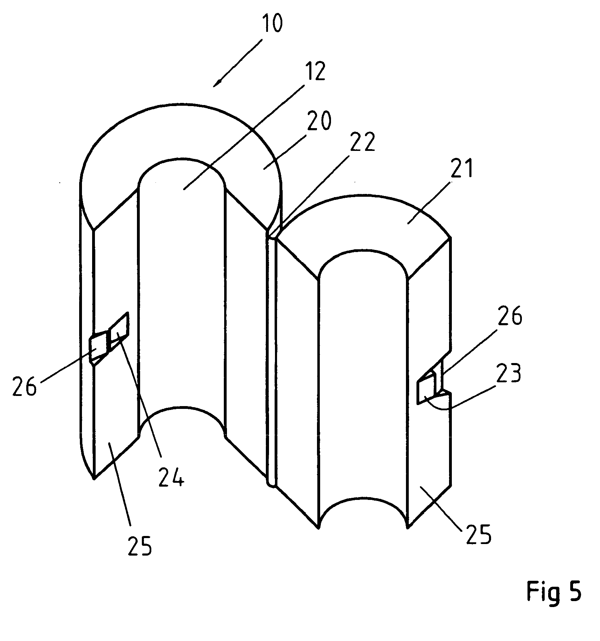

In Fig. 5 ist eine alternative, klappbare Ausführung des Distanzelementes 10 dargestellt. Das Distanzelement besteht aus zwei Segmenten 20, 21, die über ein Filmscharnier miteinander verbunden sind. Eine Rastnase 23 im zweiten Segment 21 und eine korrespondierende Aufnahmeöffnung im ersten Segment 20 sorgen für die Verriegelung der Segente 20, 21 im geschlossenen Zustand. In der Trennfläche 25 außenseits angeordnete Vertiefungen 26 bilden einen Angriffspunkt zum Öffnen des geschlossenen Distanzelementes 10 beispielsweise mit Hilfe eine nicht gezeigten Schraubendrehers.

## Patentansprüche

1. Vorrichtung zum Blockieren eines Radaufhängung mit einem Distanzelement, wobei die Radaufhängung zur Abstützung gegenüber einem Fahrzeugkörper eine Feder (6) und ein Dämpferelement (2)aufweist, das Dämpferelement eine Kolbenstange (3) und auf der Kolbenstange im Bereich eines ersten Endanschlages eine Zusatzfeder (7) aufweist, **dadurch gekennzeichnet, dass** das Distanzelement (10) aus mindestens einem Körper besteht, der auf der Kolbenstange (3) abnehmbar zwischen der Zusatzfeder (7) und einem zweiten Endanschlag (9) gehalten ist.

2. Vorrichtung nach Anspruch 1, **dadurch gekennzeichnet, dass** das Distanzelement eine zentrale Aufnahme für die Kolbenstange sowie eine schlitzförmige Einführöffnung aufweist, wobei die Einführöffnung von der zentralen Aufnahme bis zur Außenseite des Distanzelementes erstreckt und die Breite der Einführöffnung geringfügig kleiner als der Durchmesser der Kolbenstange ist.

3. Vorrichtung nach Anspruch 1, **dadurch gekennzeichnet, dass** das Distanzelement eine zentrale Aufnahme für die Kolbenstange aufweist und aus zwei zueinander klappbar und verriegelbar gehaltenen Segmenten besteht.

4. Vorrichtung nach den Anspruch 2, **dadurch gekennzeichnet, dass** endseits am Distanzelement Schrägen vorgesehen sind.

5. Vorrichtung nach einem der vorstehenden Ansprüche, **dadurch gekennzeichnet, dass** das Distanzelement aus hartelastischem Kunststoff besteht und gegenüberliegend der Einführöffnung eine Querschnittsverminderung aufweist.

6. Vorrichtung nach einem der vorstehenden Ansprüche, **dadurch gekennzeichnet, dass** die Länge des Distanzelementes so gewählt ist, dass das Distanzelement die freie Länge der Kolbenstange zwischen der Zusatzfeder und dem zweiten Endanschlag bei vollständig ausgefedertem Dämpferelement vollständig ausfüllt.

## Claims

1. A device for blocking a wheel suspension with a spacer, wherein the wheel suspension has a spring (6) and a shock-absorbing member (2) for providing support in relation to a vehicle body, and the shock-absorbing member has a piston rod (3) and a supplementary spring (7) on the piston rod in the region of a first end stop, **characterised in that** the spacer (10) comprises at least one body which is removably held on the piston rod (3) between the supplementary spring (7) and a second end stop (9).

2. A device according to claim 1, **characterised in that** the spacer has a central recess for the piston rod and a slot-type insertion opening, wherein the insertion opening extends from the central recess to the outside of the spacer, and the width of the insertion opening is slightly smaller than the diameter of the piston rod.

3. A device according to claim 1, **characterised in that** the spacer has a central recess for the piston rod and comprises two segments which are held so as to be mutually pivotable and lockable.

4. A device according to claim 2, **characterised in that** chamfers are provided at the ends of the spacer.

5. A device according to any one of the preceding claims, **characterised in that** the spacer comprises hard resilient plastics and has a cross-sectional reduction opposite the insertion opening.

6. A device according to any one of the preceding claims, **characterised in that** the length of the spacer is selected so that the spacer completely fills the free length of the piston rod between the supplementary spring and the second end stop when the shock-absorbing member is in the fully rebounded state.

## Revendications

1. Dispositif de blocage d'une suspension de roue avec un élément d'écartement, ladite suspension de roue comportant un ressort (6) et un élément amortisseur (2) pour l'appui contre un corps de véhicule, l'élément amortisseur comportant une tige de piston (3) et un ressort additionnel (7) sur la tige de piston dans la région d'une première butée terminale, **caractérisé en ce que** l'élément d'écartement (10) se compose d'au moins un corps maintenu sur la tige de piston (3) et amovible entre le ressort additionnel (7) et une deuxième butée terminale (9).

2. Dispositif selon la revendication 1, **caractérisé en ce que** l'élément d'écartement comporte un logement central pour la tige de piston ainsi qu'une ouverture d'insertion en forme de fente, ladite ouverture d'insertion s'étendant du logement central à la face extérieure de l'élément d'écartement, et la largeur de l'ouverture d'insertion étant légèrement inférieure au diamètre de la tige de piston.

3. Dispositif selon la revendication 1, **caractérisé en ce que** l'élément d'écartement comporte un logement central pour la tige de piston et se compose de deux segments solidaires rabattables et fixables l'un contre l'autre.

4. Dispositif selon la revendication 2, **caractérisé en ce que** des chanfreins sont prévus aux extrémités de l'élément d'écartement.

5. Dispositif selon l'une des revendications précédentes, **caractérisé en ce que** l'élément d'écartement est en matière plastique élastique dure et présente un rétrécissement de section transversale à l'opposé de l'ouverture d'insertion.

6. Dispositif selon l'une des revendications précédentes, **caractérisé en ce que** la longueur de l'élément d'écartement est choisie de telle sorte que l'élément d'écartement couvre entièrement la longueur libre de la tige de piston entre le ressort additionnel et la deuxième butée terminale lorsque l'élément amortisseur est entièrement détendu.
